# EUROPEAN PATENT APPLICATION

(11) **EP 1 803 602 A1**
(43) Date of publication of application: **04.07.2007**
(21) Application number: 06126656.5
(22) Date of filing: 20.12.2006
(51) Int. Cl.: B60K 31/00, B60Q 1/00, B60Q 1/48

(54) **Driving assist method and driving assist apparatus**

(30) Priority: 27.12.2005 JP 2005375821
(71) Applicant: AISIN AW CO., LTD., Anjo-shi, Aichi 444-1192 (JP)
(72) Inventor: Kubota, Tomoki, Okazaki-shi Aichi 444-8564 (JP); Mori, Toshihiro, Okazaki-shi Aichi 444-8564 (JP); Sugiura, Hiroaki, Okazaki-shi Aichi 444-8564 (JP)
(74) Representative: Vossius & Partner

(57) **Abstract**

A driving assist apparatus obtains image data from a camera mounted on a vehicle, generates stored image data, and stores the image data in an image memory. The driving assist apparatus further obtains a relative distance between the vehicle and an obstacle on the basis of a sonar mounted on the vehicle, generates a projection plane on the basis of the relative distance between the vehicle and the detected obstacle, projects the stored image data, and generates overhead image data.

## Description

The disclosure of Japanese Patent Application No. 2005-375821 filed on December 27, 2005, including the specification, drawings and abstract thereof, is incorporated herein by reference in its entirety.

The present invention relates to a driving assist method and a driving assist apparatus.

Hitherto, a driving assist apparatus for assisting a driving operation of a vehicle is well known. The driving assist apparatus displays the area surrounding the vehicle on a monitor display. The driving assist apparatus obtains image data obtained by an in-vehicle camera which is attached to the rear of the vehicle and outputs the image data on the monitor display mounted near the driver's seat. The in-vehicle camera is typically attached to the upper part of the rear bumper of the vehicle and the optic axis of the camera is directed downward, so that an image of the area behind the vehicle obtained by the camera is displayed. Using such an apparatus, it is difficult for the driver to determine the relative distance between a wheel stopper and the vehicle because it is difficult to get a sense of depth from the image displayed on the monitor display. In particular, it is difficult for the driver to determine the distance from the image displayed on the monitor display when the in-vehicle camera has a wide-angle lens because the image might be distorted due to lens aberration of the camera.

To resolve such a problem, an apparatus, which provides coordinate transformation of image data obtained by an in-vehicle camera and displays an image as if obtained from a virtual viewpoint different from the actual viewpoint of the camera, is suggested. The virtual viewpoint is above the actual viewpoint in the vertical. Moreover, an apparatus, which displays an image whose distortion is reduced, is suggested. An apparatus (for example, in Japanese Unexamined Patent Application Publication No. 2004-21307) displays image data projected onto a 3D projection plane including a surface of an elliptical cylinder and a surface of an ellipsoidal body, changes a viewpoint to a virtual viewpoint, and reduces the distortion of the image data.

However, the height of an obstacle near the vehicle can not be determined using the projection plane described above. Therefore, when there is an obstacle such as another vehicle near the vehicle, an image which includes the area behind the vehicle but which is significantly different from an actual view might be displayed. As a result, it might be difficult for the driver to determine the relative distance between the obstacle and the vehicle.

Accordingly, it is an object for the present invention to provide a driving assist method and a driving assist apparatus for displaying an overhead image which aids a driver's recognition of a relative position between a vehicle and an obstacle near the vehicle.

To solve the problems described above, various exemplary implementations of the principles described herein provide a driving assist method for generating overhead image data using image data obtained from an imaging device mounted on a vehicle, comprising the steps of: obtaining a relative distance between the vehicle and an obstacle on the basis of an obstacle detection device mounted on the vehicle; generating a projection plane on the basis of the relative distance to the detected obstacle; projecting the image data on the projection plane plane; and generating the overhead image data.

Various exemplary implementations of the principles described herein provide a driving assist apparatus in a vehicle, comprising: an image data obtaining device for obtaining image data from an imaging device mounted on the vehicle; a distance obtaining device for detecting an obstacle near the vehicle and obtaining a relative distance between the vehicle and the obstacle; a projection plane generating device for generating a projection plane on the basis of the relative distance to the obstacle; an overhead image data generating device for projecting the image data on the projection plane and generating overhead image data; and an output control device for outputting the overhead image data on display device.

Various exemplary implementations of the principles described herein provide a driving assist apparatus, wherein: the projection plane generating device generates a horizontal plane including a pixel area on the projection plane corresponding to an actual area in which the obstacle is not detected and generating a plane including a pixel area on the projection plane corresponding to an actual area in which the obstacle is detected, the plane is at a predetermined angle to the horizontal plane on the basis of the relative distance to the obstacle.

Various exemplary implementations of the principles described herein provide a driving assist apparatus, comprising: an image data storage device for storing the image data as stored image data related to the relative distance to the obstacle obtained at an imaging position; wherein: the projection plane plane generating device generates the projection plane plane on the basis of the relative distance related to the stored image data; and the overhead image data generating device generates the overhead image data for displaying a blind spot from the current imaging device using the stored image data stored in the image data storage device.

Various exemplary implementations of the principles described herein provide a driving assist apparatus, wherein: the projection plane plane generating device generates a smooth plane by approximating the projection plane plane on the basis of a position of the detected obstacle.

Various exemplary implementations of the principles described herein provide a driving assist apparatus, wherein: the distance obtaining device obtaining a presence or absence of an obstacle as well as a relative distance to the obstacle on the basis of a sonar mounted on the vehicle.

Various exemplary implementations of the principles described herein provide a driving assist apparatus, wherein: the projection plane plane is generated on the basis of the relative distance between the obstacle and the vehicle and image data is displayed on the generated projection plane plane. Therefore, the obstacle near the vehicle in the generated image data is displayed as close to actual view as possible on an overhead image based on the overhead image data, so that the relative distance to the obstacle is displayed on the overhead image in an easy-to-understand way for the driver.

Various exemplary implementations of the principles described herein provide a driving assist apparatus, wherein: a pixel area corresponding to an actual area in which an obstacle is not detected is displayed on a horizontal plane. A pixel area corresponding to an actual area in which an obstacle is detected is displayed on a plane which is at a predetermined angle to the horizontal plane. Therefore, an image based on overhead image data may be displayed as close to an actual view as possible.

Various exemplary implementations of the principles described herein provide a driving assist apparatus, wherein: a blind spot from an imaging device is displayed, so that, for example, a white line or a wheel stopper may be displayed on an overhead image even when a vehicle enters a parking target area.

Various exemplary implementations of the principles described herein provide a driving assist apparatus, wherein: a smooth plane is generated on a projection plane on the basis of a position of an obstacle. Therefore, a part of the projection plane which is totally different from an actual view is approximated and an image based on overhead image data may be displayed as close to an actual view as possible.

Various exemplary implementations of the principles described herein provide a driving assist apparatus, wherein: the distance obtaining means obtains a presence or absence of an obstacle as well as a relative distance on the basis of a sonar. Therefore, the sonar mounted on the vehicle may be used efficiently.
An embodiment of the present invention is described with reference to FIGs. 1 through 11 below.

FIG. 1 is a block diagram of a driving assist apparatus according to the present embodiment of the invention.

FIG. 2 is a diagram showing a vehicle body outline.

FIG. 3A is a diagram showing a mounting position of a sonar and FIG. 3B is a diagram showing a mounting position of a camera.

FIG. 4 is a diagram showing a rear monitor screen.

FIG. 5 is a diagram showing procedures in the present embodiment of the invention.

FIG. 6 is a diagram showing procedures in the present embodiment of the invention.

FIG. 7 is a diagram showing procedures in the present embodiment of the invention.

FIG. 8A is a diagram showing a vehicle imaging the area behind the vehicle with the camera and FIG. 8B is a diagram showing image data and FIG. 8C is a diagram showing stored image data.

FIG. 9 is a diagram showing a measuring method of a relative distance to an obstacle near the vehicle.

FIG. 10 is a diagram showing an overhead image.

FIG. 11 is a diagram showing a support screen.

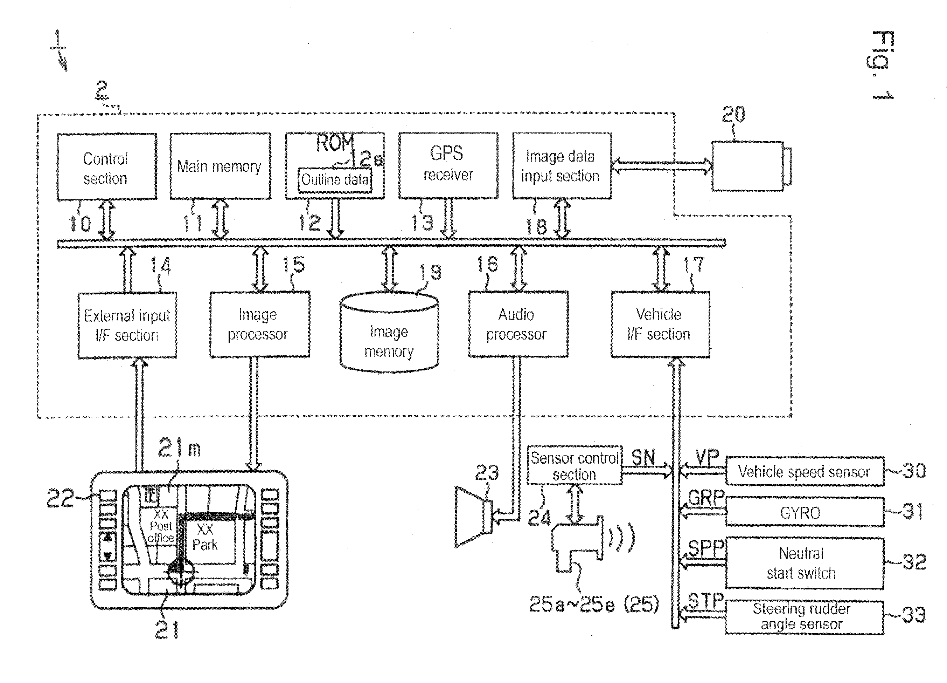

FIG. 1 is a block diagram showing a structure of a driving assist apparatus 1 mounted in a vehicle.

As shown in FIG. 1, a navigation unit 2 in the driving assist apparatus 1 includes a control section 10 as image data obtaining means, distance obtaining means, and projection plane generating means as well as a main memory 11 and an ROM 12. The control section 10 includes a computer (not shown) for mainly controlling various types of processing on the basis of, for example, a route guidance program, a driving assist program, and various programs stored in the ROM 12. The main memory 11 temporarily stores results calculated by the control section 10 and further stores variables and flags used for a driving assist.

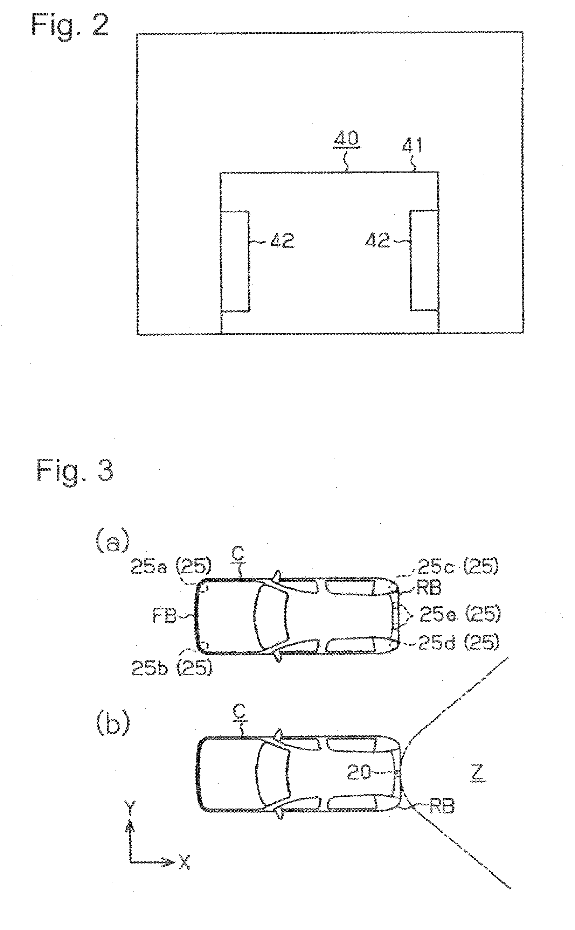

The ROM 12 stores outline data 12a indicating a current position of a vehicle C. The outline data 12a is data for outputting an outline of the vehicle C (in FIG. 3) mounted with the driving assist apparatus 1 on a display 21 as display means. When the outline data 12a is output on the display 21, a vehicle outline 40 as an indicator is displayed as shown in FIG. 2. The vehicle outline 40 includes a vehicle body outline 41 indicating the body of the vehicle and a wheel outline 42. The vehicle body outline 41 is an outline of the vehicle which is projected on a road surface. The wheel outline 42 indicates the positions of the rear wheels of the vehicle C. Each of the vehicle body outline 41 and the wheel outline 42 indicate the positions of the vehicle body and the rear wheels as seen from a virtual point located above a rear bumper RB (in FIG. 3A).

As shown in FIG. 1, the navigation unit 2 includes a GPS receiver 13. The control section 10 regularly calculates the absolute coordinates of the vehicle C such as the latitude, the longitude, and the altitude on the basis of a position detection signal input from the GPS receiver 13.

The display 21 in the driving assist apparatus 1 is a touch panel. When the vehicle moves forward, an image processor 15 as projection plane generating means, overhead image data generating means, and output control means in the navigation unit 2 outputs map drawing data stored in a storage section (not shown) and displays a map screen 21m as shown in FIG. 1. When a driver performs input operation on the touch panel or with an operation switch 22 located next to the display 21, an external input interface section (hereinafter referred to as an external input I/F section 14) in the navigation unit 2 outputs an input signal corresponding to the input operation to the control section 10.

The navigation unit 2 includes an audio processor 16. The audio processor 16 includes a memory (not shown) storing an audio file and/or a digital/analog converter, and outputs an audio guidance and/or an alarm from a speaker 23 in the driving assist apparatus 1 using the audio file.

The navigation unit 2 further includes a vehicle interface section (vehicle I/F section 17). The control section 10 inputs a vehicle speed pulse VP and a direction detection signal GRP from a vehicle speed sensor 30 and a gyro 31 mounted in the vehicle C through the vehicle I/F section 17. The control section 10 determines whether the vehicle moves forward or backward on the basis of a wave of the vehicle speed pulse VP and calculates the amount of the movement Δd of the vehicle C on the basis of an input pulse number. The control section 10 updates a current direction GR as a variable stored in the main memory 11 on the basis of the input direction detection signal GRP. The control section 10 further calculates a relative position and a relative direction on the basis of a basic position by an autonomous navigation using the vehicle speed pulse VP and the direction detection signal GRP and corrects the vehicle position obtained by the GPS receiver 13. Note that, in the present embodiment of the invention, a point located at the center of the rear bumper RB of the vehicle C is used as the vehicle position.

The control section 10 inputs a shift position signal SPP from a neutral start switch 32 of the vehicle C through the vehicle I/F section 17 and updates a shift position SP as a variable stored in the main memory 11. The control section 10 inputs a steering sensor signal STP from a steering rudder angle sensor 33 through the vehicle I/F section 17. The control section 10 updates a current rudder angle STR of the vehicle C stored in the main memory 11 on the basis of the steering sensor signal STP.

The control section 10 inputs a sonar signal SN indicating the relative distance between the vehicle and an obstacle near the vehicle from a sensor control section 24 in the vehicle C through the vehicle I/F section 17. The sensor control section 24 is a computer for executing input signal processing and controlling each of a plurality of sonars 25, so that the sensor control section 24 inputs/outputs various signals among the sonars 25 as an obstacle detecting device as shown in FIG. 3A. As one of such sonars 25, a first clearance sonar (hereinafter referred to as a first sonar 25a) is attached on the right corner of a front bumper FB and a second clearance sonar (hereinafter referred to as a second sonar 25b) is attached on the left corner of the front bumper FB. A third clearance sonar (hereinafter referred to as a first sonar 25c) is attached on the right corner of the rear bumper RB, a forth clearance sonar (hereinafter referred to as a forth sonar 25d) is attached on the left corner of the rear bumper RB, and a pair of clearance sonars 25e are attached in the middle of the rear bumper RB. Note that, when there is no need to individually determine the first through forth sonars 25a through 25d and the rear sonars 25e, they will be referred to as the sonars 25 as a matter of convenience.

Each of the sonars 25 incorporates a microphone for transferring supersonic waves and/or a control circuit for amplifying the supersonic waves (not shown). Each of the sonars 25 repeatedly outputs supersonic waves around the vehicle in a predetermined order. The sensor control section 24 calculates the relative distances Rd between each of the sonars 25 and an obstacle using the time required for supersonic waves to return to each of the sonars 25 after reflecting off the obstacle. Then the sensor control section 24 outputs the sonar signal SN which indicates the presence or absence of the obstacle near the vehicle and the relative distance Rd between the vehicle and the obstacle to the control section 10.

When the relative distance Rd between the obstacle and the vehicle C is determined to be equal to or less than 500 mm by the sensor control section 24, the sensor control section 24 controls the audio processor 16 to output an alarm or an audio message from the speaker 23.

The navigation unit 2 includes an image data input section 18 as image data obtaining means. The image data input section 18 is controlled by the control section 10 and controls a rear monitor camera (hereinafter referred to as a camera 20) as an imaging device mounted on the vehicle C. The image data input section 18 obtains image data G having undergone analog/digital conversion processing by the camera 20, abstracts predetermined area data from the image data G, and generates stored image data G1. Then the image data input section 18 temporarily stores the stored image data G1 in an image memory 19 as image data storage means in the navigation unit 2 as being related to, for example, accumulated pulse numbers which are stored since the vehicle C moves backward from an initial position.

The camera 20 is attached to the rear part of the vehicle C such as on a rear door of the vehicle C as shown in FIG. 3B, and the optic axis of the camera 20 is directed downward. The camera 20 is a digital camera for imaging color images and may have optics (not shown) such as, a wide-angle lens and a mirror, and a CCD image sensor (not shown). The viewing range Z of the camera 20 may be about several meters from the center part of the rear bumper RB of the vehicle C.

The image processor 15 described above may include a calculating section for image processing and a VRAM for temporarily storing output data displayed on the display 21. Then the image processor 15 is controlled by the control section 10 to generate a composite image using the stored image data G1 stored in the image memory 19.

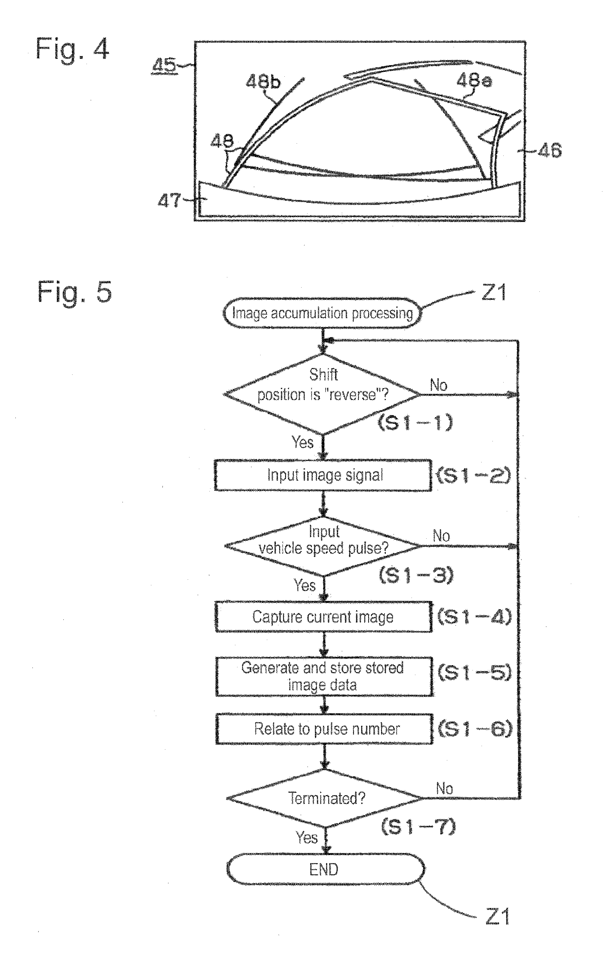

The image processor 15 outputs an image signal from the camera 20 at a predetermined time and displays a rear monitor screen 45 on the display 21 as shown in FIG. 4. In the rear monitor screen 45, a background image 46 including the area behind the vehicle C and a vehicle rear part image 47 including the rear bumper RB are displayed. The background image 46 is distorted due to lens aberration since the camera 20 has a wide-angle lens. Further, the background image 46 is a mirror-reversed image of the image signal from the camera 20 because the driver usually checks the area behind the vehicle using the rearview mirror. Therefore, an obstacle located near the right rear section of the vehicle C is displayed on the right side of the background image 46 and an obstacle located near the left rear section of the vehicle C is displayed on the left side of the background image 46.

The image processor 15 overlaps a guide line 48 on the background image 46. The guide line 48 may include a probable movement locus 48a drawn depending on the current rudder angle STR of the vehicle C and an extended line 48b indicating the width of the vehicle C.

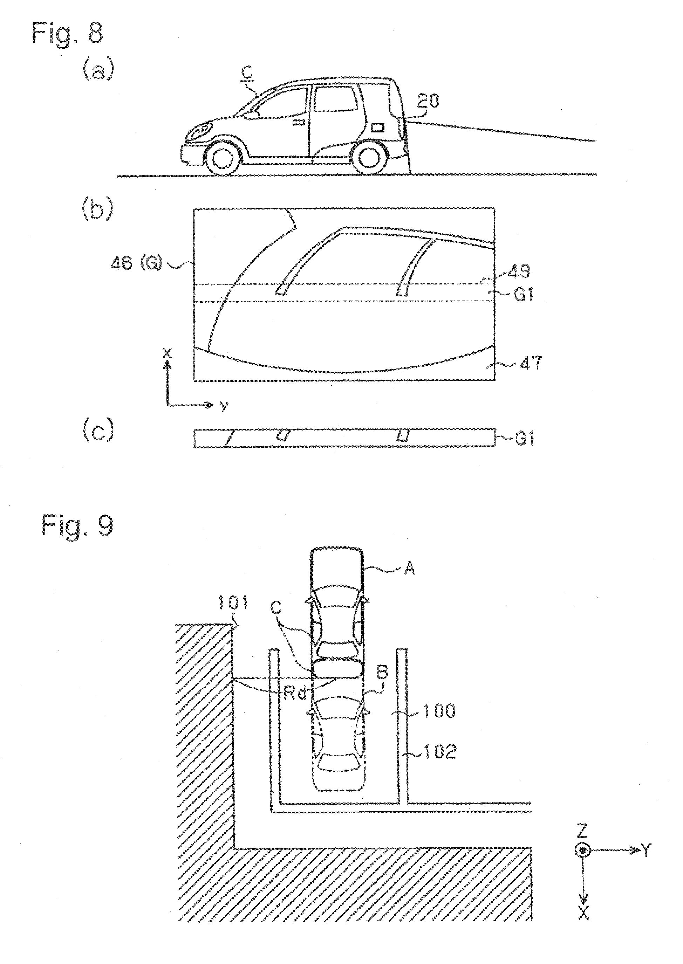

Next, procedures for driving assist operation in the present embodiment of the invention are described with reference to FIGs. 5 through 7 below. The control section 10 inputs the shift position signal SPP from the neutral start switch 32 according to a driving assist program stored in the ROM 12 and waits until the current shift position SP is changed to "reverse" (Step S1-1). When the shift position SP is changed to "reverse", the control section 10 controls the camera 20 to input an image signal of an image including the area behind the vehicle (Step S1-2). As shown in FIG. 8A, the camera 20 images the area several meters behind the vehicle. Immediately after the vehicle moves backward, the image processor 15 outputs the image signal on the display 21 and displays the background image 46 on the display 21 as shown in FIG. 8B.

The control section 10 determines whether the vehicle speed pulse VP is input from the vehicle speed sensor 30 (Step S1-3). When the vehicle speed pulse VP is not input, the procedure returns to Step S1-1. When it is determined that the vehicle speed pulse VP is input (Step S1-3=YES), that is, when the vehicle C moves backward, the control section 10 adds the input vehicle speed pulse to the accumulated pulse number Tp stored in the main memory 11. Then the control section 10 captures the background image 46 as shown in FIG. 8B (Step S1-4), abstracts an area 49 from the obtained image data G, generates stored image data G1 using the abstracted area 49, and stores the image data G1 (Step S1-5).

After generating the stored image data G1, the control section 10 relates the stored image data G1 to the accumulated pulse number Tp (Step S1-6). In this case, a table corresponding to both the accumulated pulse number Tp and the stored image data G1 may be created, or the accumulated pulse number Tp may be attached as a header.

The control section 10 determines whether image accumulation processing is terminated or not (Step S10-7). For example, the control section 10 determines that image accumulation processing is terminated when an off signal is input from an ignition module (not shown). When it is determined that image accumulation processing is not terminated (Step S1-7=NO), the procedure returns to Step S1-1.

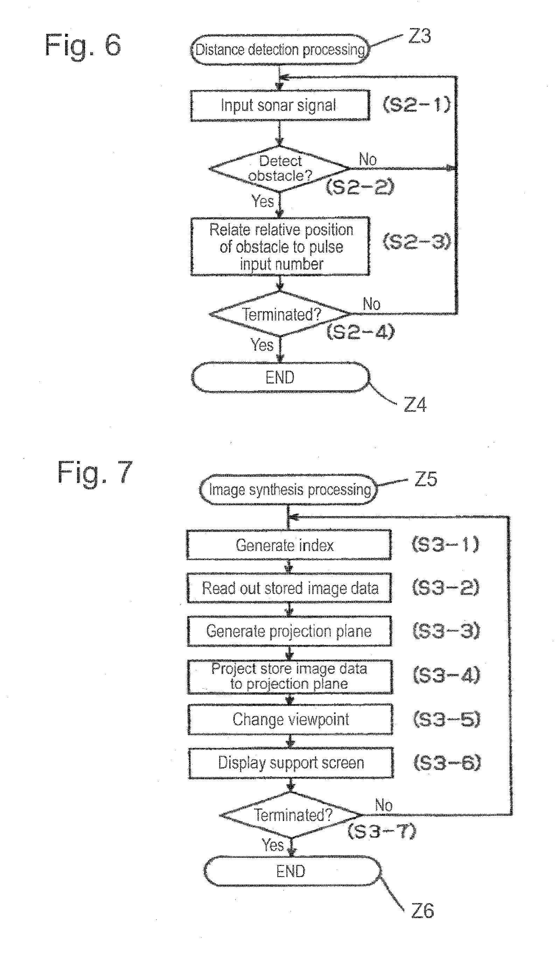

The control section 10 executes distance detection processing as shown in FIG. 6 in parallel with image accumulation processing. First, the control section 10 inputs the sonar signal SN from the sensor control section 24 (Step S2-1). For example, when the vehicle C is located at a position A in FIG. 9, the sensor control section 24 determines whether there is an obstacle near the vehicle C on the basis of the sonar 25. For example, when the forth sonar 25d which is attached on the left corner of the rear bumper RB of the vehicle detects an obstacle such as a wall 101, the sensor control section 24 calculates the relative distance Rd between a predetermined position of the vehicle C such as the center of the rear bumper RB of the vehicle C and the wall 101 located near a parking target area 100. Then the sensor control section 24 outputs the sonar signal SN including information of the presence or absence of the obstacle and the relative distance Rd to the obstacle to the control section 10.

The control section 10 determines whether an obstacle such as a wall or another parked vehicle near the vehicle C is detected on the basis of the input sonar signal SN (Step S2-2). When it is determined that such an obstacle is not detected (Step S2-2=NO), the procedure returns to Step S2-1.

When it is determined that such an obstacle is detected (Step S2-2=YES), the control section 10 stores the relative distance Rd on the basis of the sonar signal SN in the main memory 11 and relates the relative distance Rd to the accumulated pulse number Tp at a given time (Step S2-3). The relative distance Rd between the obstacle and the vehicle C here means the relative distance between the obstacle and a predetermined position on the vehicle C (for example, the center of the front bumper of the vehicle C). As a result, the accumulated pulse number Tp indicating the distance which the vehicle C moves backward from the initial position to the current position, the relative distance Rd between the current vehicle position and the obstacle, and the stored image data G1 obtained at the current vehicle position are related to each other.

Then the control section 10 determines whether distance detection processing is terminated (Step S2-4). When it is determined that distance detection processing is not terminated (Step S2-4=NO), the procedure returns to Step S2-1.

Next, the control section 10 controls the image processor 15 to execute image synthesis processing as shown in FIG. 7. The image synthesis processing is executed in parallel with the image accumulation processing and the distance detection processing described above. The control section 10 determines that stored image data G1 sufficient to generate overhead image data is stored in the image memory 19, and generates an index to read out the stored image data G1 (Step S3-1). The number of indexes to be generated is determined by subtracting the accumulated pulse numbers Tp stored in the main memory 11 from a predetermined number of pulse numbers. More specifically, each index is used for reading out the stored image data G1 obtained at each position a predetermined distance (for example, 100 mm) from the current position of the vehicle C.

The image processor 15 reads out the stored image data G1 as being related to the each generated index from the image memory 19 (Step S3-2). Then the image processor 15 reads out the relative distance Rd to the obstacle as being related to the accumulated pulse numbers Tp indicated by each generated index from the main memory 11 and generates a projection plane (Step S3-3).

More specifically, the image processor 15 relates coordinates in a vehicle coordinate system (coordinates with reference to an X-axis, a Y-axis, and a Z-axis in FIG. 9) corresponding to each of the accumulated pulse numbers Tp to pixel coordinates in a screen coordinate system (coordinates with reference to an x-axis, a y-axis, and a z-axis (not shown) in FIG. 8B). A range in the screen coordinate system corresponding to the actual area in the vehicle coordinate system in which no obstacle is detected is displayed on a horizontal plane with reference to the x-axis and y-axis. A range in the screen coordinate system corresponding to the actual area in the vehicle coordinate system in which an obstacle is detected is displayed on a plane which is at a predetermined angle to the horizontal plane on the basis of the detected relative distance Rd. The plane includes at least a z-coordinate, so that the plane may be at right angles to the horizontal plane indicating a road face or the plane may be at a predetermined angle to the horizontal plane. Then, a projection plane which includes both the plane and the horizontal plane connected with each other is generated. When the obstacle is not detected, the projection plane has only the horizontal plane including the x-axis and the y-axis. In this case, if there is an obstacle which is located far from a position as a median value among detected obstacles (for example, in the case where the obstacle is located at a distance equal to or greater than by 10%) the distance to the position of the median value), the position of the distant obstacle is replaced by the median value and the plane described above is approximated to a smooth plane. When the sonar 25 detects the relative distance Rd including coordinates in the Z-axis direction in the vehicle coordinate system, for example, a slope and/or an irregularity of the wall 101 is indicated by each of the planes described above.

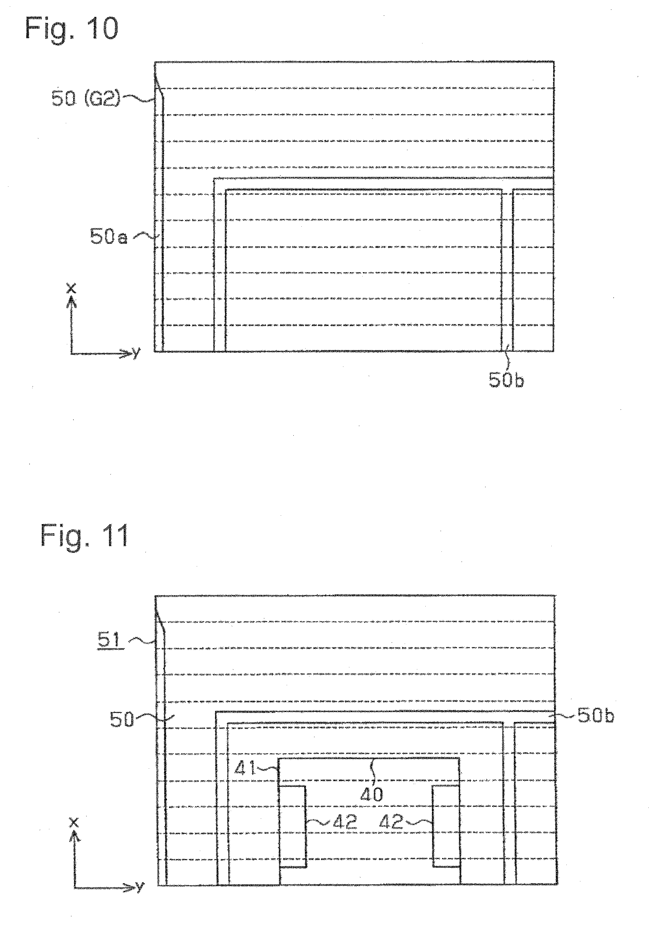

After reading out the stored image data G1, the image processor 15 arranges the stored image data G1 on the generated projection plane in an array of the moving direction of the vehicle C (x-direction), that is, each of the stored image data G1 is projected on the generated projection plane (Step S3-4). After projecting the stored image data G1 on the projection plane, the image processor 15 changes the viewpoint of the stored image data G1 from the current viewpoint of the camera to a virtual viewpoint set above the current viewpoint in the vertical direction (Step S3-5). As a result, overhead image data G2 is generated as shown in FIG. 10. FIG. 10 is a diagram showing the overhead image data G2 generated when the vehicle C enters the parking target area 100 as shown in FIG. 9. An overhead image 50 based on the overhead image data G2 is an image which includes the parking target area 100 located under the rear part of the current vehicle C. That is, although the parking target area 100 is currently in the blind spot from the camera since the area is under the current vehicle C, the parking target area 100 and a white line 102 zoning the parking target area 100 (in FIG. 9) are displayed in an image 50b. Further, an image 50a including a wall 101 near the vehicle C is projected on a vertical projection plane, so that the wall 101 is displayed on the projection plane as if the wall were at right angles to the road surface.

After generating the overhead image data G2, the image processor 15 overlaps the overhead image 50 and the vehicle body outline 40 on a support screen 51 as shown in FIG. 11 (Step S3-6). The driver may check the image 50b including the white line 102 and the vehicle body outline 40 displayed on the support screen 51 and recognize the position of the vehicle C within the parking target area 100. Further, the driver may check the wheel outline 42 and the relative distance between the vehicle C and, for example, a wheel stopper, so that the driver may control the impact with the wheel stopper during driving operation.

After the support screen 51 is displayed, it is determined whether a series of steps of the procedure should be terminated or not (Step S3-7). When it is determined that the series of steps of the procedure should be terminated (Step S3-7=YES), the procedure is terminated. When it is determined that the series of steps of the procedure should not be terminated (Step S3-7=NO), the procedure returns to Step S3-1.

According to the current embodiment as described above, the user may obtain the following advantages.
1) According to the present embodiment, the control section 10 of the driving assist apparatus 1 detects an obstacle near the vehicle C on the basis of the first through forth sonars 25a through 25d and the rear sonar 25e attached on the vehicle C. Further, the control section 10 generates a projection plane corresponding to the position of the obstacle on the basis of the relative distance Rd to the obstacle. The image processor 15 projects each of the stored image data G1 which are stored while the vehicle C moves backward to the parking target area 100 on the generated projection plane and generates the overhead image data G2. The overhead image data G2 is output on the display 21 and the support screen 51 is displayed.
Therefore, the obstacle near the vehicle C is displayed on the overhead image 50 based on the generated overhead image data G2 as close to an actual view as possible. As a result, it is easy for the driver to recognize the actual distance to the obstacle displayed in the overhead image 50, and the driver may drive the vehicle C to avoid to crash with the obstacle during parking operation or park the vehicle C with keeping an enough interval between the vehicle C and the obstacle.

2) According to the present embodiment, the image processor 15 generates a smooth projection plane on the basis of each of the relative distances Rd detected by the sonar 25. Therefore, the stored image data G1 displayed as the overhead image 50 on the projection plane may be an easy-to-understand image for the driver.

3) According to the present embodiment, the area 49 is abstracted from the image data G, the stored image data G1 is generated on the basis of the abstracted area 49, and the stored image data G1 is stored in the image memory 19. The stored image data G1 is arranged in the direction corresponding to the moving direction of the vehicle C and displayed as the overhead image 50 including the blind spot from the current camera 20. Because the white line and/or the wheel stopper which is currently located under the vehicle C may be displayed together with the vehicle body outline 40 on the overhead image 50, the driver may recognize the relative position between the white line or the wheel stopper and the vehicle C.

Note that, the present embodiment described above may be modified as follows.
* In the present embodiment, the stored image data G1 is arranged in the moving direction of the vehicle C and the overhead image data G2 is generated. However, another way to generate a composite image may be used.

* In the present embodiment, the control section 10 inputs the shift position signal SPP from the neutral start switch 32 through the vehicle I/F section 17. However, the signal may be input from another device such as a transmission ECU. Also, the control section 10 may determines whether the vehicle C moves backward on the basis of only a wave of the vehicle speed pulse VP.

* The sensor control section 24 may be included in the driving assist apparatus 1.

* The control section 10 may determines whether an obstacle is a movable body on the basis of the sonar signal SN input from the sensor control section 24. When it is determined that the obstacle is a movable body, a projection plane may not be needed to generate.

* In the present embodiment, the relative distance Rd to the obstacle is detected on the basis of the sonar 25. However, the relative distance Rd may be calculated by processing image data G obtained from the camera 20.

* In the present embodiment, the camera 20 may be attached on the front part of the vehicle C such as on the upper of the front bumper instead of the rear part of the vehicle C.

* In the present embodiment, the stored image data G1 is stored in the image memory 19 to display the support screen 51. However, the driving assist apparatus 1 may project only latest image data G on a projection plane without using past stored image data G1. In this case, an image which aids for the driver to understand the relative distance to the obstacle may be displayed while the driver drive the vehicle C on a narrow road.

## Claims

1. A driving assist method for generating overhead image data using image data obtained from an imaging device (20) mounted on a vehicle, comprising the steps of:
obtaining a relative distance between the vehicle and an obstacle on the basis of an obstacle detection device (25) mounted on the vehicle;
generating a projection plane on the basis of the relative distance to the detected obstacle;
projecting the image data on the projection plane; and
generating the overhead image data.

2. A driving assist apparatus (1) in a vehicle, comprising:
image data obtaining means for obtaining image data from an imaging device (20) mounted on the vehicle;
distance obtaining means for detecting an obstacle near the vehicle and obtaining a relative distance between the vehicle and the obstacle;
projection plane generating means for generating a projection plane on the basis of the relative distance to the obstacle;
overhead image data generating means for projecting the image data on the projection plane and generating overhead image data; and
output control means for outputting the overhead image data on display means.

3. The driving assist apparatus according to Claim 2, wherein:
the projection plane generating means generates a horizontal plane including a pixel area on the projection plane corresponding to an actual area in which the obstacle is not detected, and generates a plane including a pixel area on the projection plane corresponding to an actual area in which the obstacle is detected, the plane is at a predetermined angle to the horizontal plane on the basis of the relative distance to the obstacle.

4. The driving assist apparatus according to Claim 2 or 3, further comprising:
image data storage means for storing the image data as stored image data related to the relative distance to the obstacle obtained at an imaging position; wherein:
the projection plane generating means generates the projection plane on the basis of the relative distance related to the stored image data; and
the overhead image data generating means generates the overhead image data for displaying a blind spot from the current imaging device using the stored image data stored in the image data storage means.

5. The driving assist apparatus according to any one of Claims 2 through 4, wherein:
the projection plane generating means generates a smooth plane by approximating the projection plane on the basis of a position of the detected obstacle.

6. The driving assist apparatus according to any one of Claims 2 through 5, wherein:
the distance obtaining means obtaining a presence or absence of an obstacle as well as a relative distance to the obstacle on the basis of a sonar mounted on the vehicle.
